# EUROPÄISCHE PATENTSCHRIFT

(11) **EP 1 554 147 B1**
(45) Veröffentlichungstag und Bekanntmachung des Hinweises auf die Patenterteilung: **30.07.2008**
(21) Anmeldenummer: 03775053.6
(22) Anmeldetag: 10.10.2003
(51) Int. Cl.: B60J 7/14, B60J 7/12, B60J 7/20, B60J 7/06

(54) **BEWEGLICHES MEHRFACH GETEILTES DACH FÜR EIN KRAFTFAHRZEUG**
MOVABLE MULTISECTION ROOF FOR A MOTOR VEHICLE
TOIT MOBILE A PLUSIEURS SUBDIVISIONS POUR UN VEHICULE AUTOMOBILE

(30) Priorität: 17.10.2002 DE 10248344
(43) Veröffentlichungstag der Anmeldung: 20.07.2005
(73) Patentinhaber: Wilhelm Karmann GmbH, 49084 Osnabrück (DE)
(72) Erfinder: HESELHAUS, Udo, 4979 Ibbenbüren (DE)
(86) Internationale Anmeldenummer: PCT/DE2003/003367
(87) Internationale Veröffentlichungsnummer: WO 2004/037583

(56) Entgegenhaltungen:
- DE-A- 3 925 150
- DE-A- 4 203 229
- DE-A- 19 731 330
- DE-A- 19 741 264
- DE-A- 19 926 474
- DE-C1- 19 636 683
- US-A- 5 031 959
- US-A1- 2001 017 478

## Beschreibung

Die Erfindung betrifft ein Kraftfahrzeug mit einem Dach, das zumindest einen insgesamt zu seiner Öffnung beweglichen Teil aufweist, nach dem Oberbegriff des Anspruchs 1.

Aus der DE 199 26 474 A1 ist ein Cabriolet-Fahrzeug bekannt, das zwei Dachstellungen, nämlich zum einen eine vollständig geschlossene und zum anderen eine vollständig geöffnete, insbesondere auch bei einem hoch bauenden Fahrzeug zuläßt. Hierzu ist das Dach mehrfach quer geteilt in hintereinanderliegende Dachteile. Neben den beiden genannten Dachstellungen sind jedoch keine weiteren möglich. Zudem muß das Überführen des Daches aus der geschlossenen in die geöffnete Stellung und umgekehrt bei Stillstand oder zumindest nahezu Stillstand des Fahrzeugs erfolgen, da ein hinterer Dachteil während seiner Öffnung mit der Fahrtrichtung einen spitzen Winkel einschließt und daher dem Fahrtwind eine große Angriffsfläche bietet.

Die gattungsgemäße DE 196 36 683 C1 offenbart ein Kraftfahrzeug mit einem festen Dach und einer darin ausgenommenen Dachöffnung, die von einem Verdeckteil abdeckbar ist, der sich von der Oberkante eines Windschutzscheibenrahmens bis zu einem hinteren Bereich der festen Dachhaut erstreckt. Der Verdeckteil ist in seinem hinteren Bereich aufstellbar und auch nach Art eines Lamellendachs aufschiebbar. Das vordere Ende wird von einem dachfesten vorderen Festelement gebildet, das auch während des Aufschiebens des Verdeckteils seine Lage nicht verändert. Auch für das Aufschieben ist daher nur eine Öffnung nach Art eines herkömmlichen Lamellen- oder lamellenartigen Schiebedachs vorgesehen. Dabei laufen seitliche Rollen des Verdeckteils ohnehin noch auf karosseriefesten Laufflächen ab, was insbesondere die Breite der möglichen Öffnung begrenzt.

Der Erfindung liegt das Problem zugrunde, ein Dach mit der Möglichkeit des Aufstellens eines hinteren Dachbereichs zu optimieren.

Die Erfindung löst dieses Problem durch ein Kraftfahrzeug mit den Merkmalen des Anspruchs 1. Hinsichtlich vorteilhafter Ausgestaltungen wird auf die weiteren Ansprüche 2 bis 11 verwiesen.

Erfindungsgemäß ist mit der Möglichkeit der Aufstellung nur eines hinteren Bereichs eines auch insgesamt öffnungsfähigen Dachteils eine Mehrzahl von Öffnungszuständen dieses Dachteils verwirklicht. Dadurch, daß bei Aufstellung im rückwärtigen Bereich dieser Dachteil ansonsten geschlossen verbleibt, kann eine besonders zugluftarme Lüftungsstellung erreicht werden. Die Gesamtöffnungsbewegung muß für die Teilöffnung im hinteren Bereich nicht eingeleitet werden, wodurch die Mechanik für die Teilöffnung einfach gehalten werden kann. Außerdem ist die Angriffsfläche für den Fahrtwind minimiert, so daß die Bewegung in die aufgestellte Lage und die Rückbewegung vorteilhaft auch während der Fahrt, auch bei hohen Geschwindigkeiten, möglich sind. Da der bewegliche Dachteil die volle Breite zwischen Seitenscheiben einnimmt, kann bei vollständig geöffnetem Dachteil ein Cabriolet- oder Targafahrzeug gebildet sein. Auch in der Aufstellung nur des hinteren Bereichs ist dann eine die ganze Innenraumbreite übergreifende Lüftungsöffnung geschaffen. Das Freiluftgefühl ist gegenüber Fahrzeugen mit festen Dachrahmenteilen, aus denen nur ein Schiebe- oder Ausstelldach im mittleren Dachbereich ausgenommen ist, deutlich erhöht.

Ob der hintere Dachteil ebenfalls in die Karosserie versenkbar ist und somit ein Cabriolet-Fahrzeug geschaffen wird oder nur eine Teilöffnung des Daches möglich bleiben soll, ist unabhängig von der erfindungsgemäßen Dachteilausbildung. Diese ist daher für verschiedenste Dächer einsetzbar und ermöglicht so eine maximale Flexibilität.

Auch ist es vorteilhaft möglich, daß bei einem Fahrzeug je nach Beladezustand wahlweise der hintere Dachteil auch versenkt wird oder, wenn etwa mehr Stauraum benötigt wird, in der Targa-Stellung verbleibt.

Wenn der bewegliche Dachteil von einem flexiblen, insbesondere textilen Bezug überspannt ist, kann für die Aufstellbarkeit im rückwärtigen Bereich vorteilhaft ein Spriegel vorgesehen sein, der gegenüber seitlichen Rahmenteilen, an denen er angeordnet ist, verlagerbar ist, jedoch mit den seitlichen Rahmenteilen zur Gesamtöffnung des Dachteils beweglich ist. Der mechanische Zusatzaufwand, um den Spriegel an den Rahmenteilen verlagerbar zu halten, ist gering und beansprucht nur wenig Bauraum. In geschlossener Stellung kann der Spriegel für eine dichtend pressende Anlage des beweglichen Dachteils an den hinteren Dachteil Sorge tragen.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Gesamtansicht eines erfindungsgemäßen Kraftfahrzeugs bei geschlossenem Dach ohne eingezeichnete Dachbespannung in perspektivischer Ansicht,
- Fig. 2: eine ähnliche Ansicht wie Figur 1 mit aufgestelltem hinterem Ende des vorderen Dachteils,
- Fig. 3: eine ähnliche Ansicht wie Figur 2 bei aufgeschwenktem hinterem Dachteil,
- Fig. 3a: den gleichen Bewegungszustand des Daches wie Fig. 3 mit zusätzlich teilweise eingezeichneter textiler Bespannung des vorderen Dachteils,
- Fig. 4: eine ähnliche Ansicht wie Fig. 3 bei fortschreitender Öffnung des Daches unter Aufschwenken und Einfalten des vorderen Dachteils,
- Fig. 5: eine ähnliche Ansicht wie Fig. 4 in einer nahezu horizontalen und vollständig eingefalteten Stellung des vorderen Dachteils,
- Fig. 6: eine ähnliche Ansicht wie Fig. 5 in nahezu vertikaler Zwischenstellung des vorderen Dachteils in der Karosserie,
- Fig. 7: eine ähnliche Ansicht wie Fig. 6 bei weiterem Einschwenken des vorderen Dachteils zum Erreichen seiner Ablagestellung in der Karosserie,
- Fig. 8: eine ähnliche Ansicht wie Fig. 7 mit gleichbleibender Stellung des vorderen Dachteils und in Ausgangsstellung zurückgeschwenktem hinterem Dachteil,
- Fig. 9: eine alternative Ablagestellung des vorderen Dachteils oberhalb des hinteren Dachteils,
- Fig. 10: die Ablagestellung nach Fig. 9 in Seitenansicht des Fahrzeugs,
- Fig. 11: das Dachgestänge in Dachstellung nach Fig. 2 in schematischer Seitenansicht,
- Fig. 12: das Dachgestänge in Dachstellung nach Fig. 4 in schematischer Seitenansicht,
- Fig. 13: das Dachgestänge in Dachstellung nach Fig. 5 in schematischer Seitenansicht,
- Fig. 14: das Dachgestänge in Dachstellung nach Fig. 6 in schematischer Seitenansicht,
- Fig. 15: das Dachgestänge in Dachstellung zwischen den Figuren 6 und 7 in schematischer Seitenansicht,
- Fig. 16: das Dachgestänge in Dachstellung nach Fig. 7 in schematischer Seitenansicht.

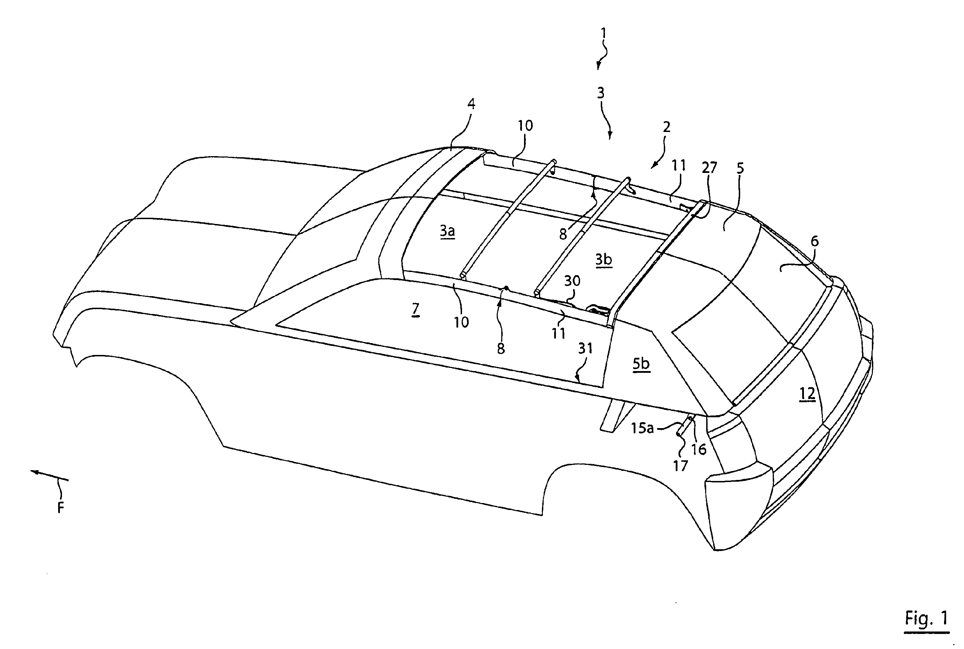

Das in Figur 1 dargestellte erfindungsgemäße Kraftfahrzeug 1 ist mit einem Dach 2 versehen, das zumindest einen öffnungsfähigen vorderen Bereich 3 aufweist. Dieser vordere Bereich 3 erstreckt sich von einem Windschutzscheibenrahmen 4 in Fahrzeuglängsrichtung bis zu einem hinteren Dachteil 5, der eine Heckscheibe 6 umfaßt. Der vordere, bewegliche Bereich 3 muß dabei nicht, wie hier gezeigt, unmittelbar an den Windschutzscheibenrahmen 4 anschließen.

Der bewegliche Dachteil 3 liegt bei geschlossenem Dach 2 im wesentlichen horizontal; er erstreckt sich im Ausführungsbeispiel über die gesamte Innenraumbreite und steht im geschlossenen Zustand in Kontakt mit Oberkanten von Seitenscheiben 7. Da hier ein Innenraum mit zumindest zwei hintereinander liegenden Sitzreihen übergriffen ist, weist der bewegliche Dachteil 3 eine Querteilung 8 auf, um die hintereinander liegende Bereiche 3a, 3b des Dachteils 3 gegeneinander einfaltbar sind. Die Bereiche 3a, 3b können sowohl durch starre Plattenkörper als auch von Rahmenkonstruktionen gebildet sein, die von einem flexiblen Bezug 9 überspannt sind. Im letztgenannten Fall sind den Bereichen 3a und 3b seitliche Rahmenteile 10 bzw. 11 zugeordnet.

Bei einem kürzeren Fahrzeug 1, etwa bei einem Zweisitzer, kann der bewegliche Dachteil 3 auch ohne eine Querteilung 8 auskommen.

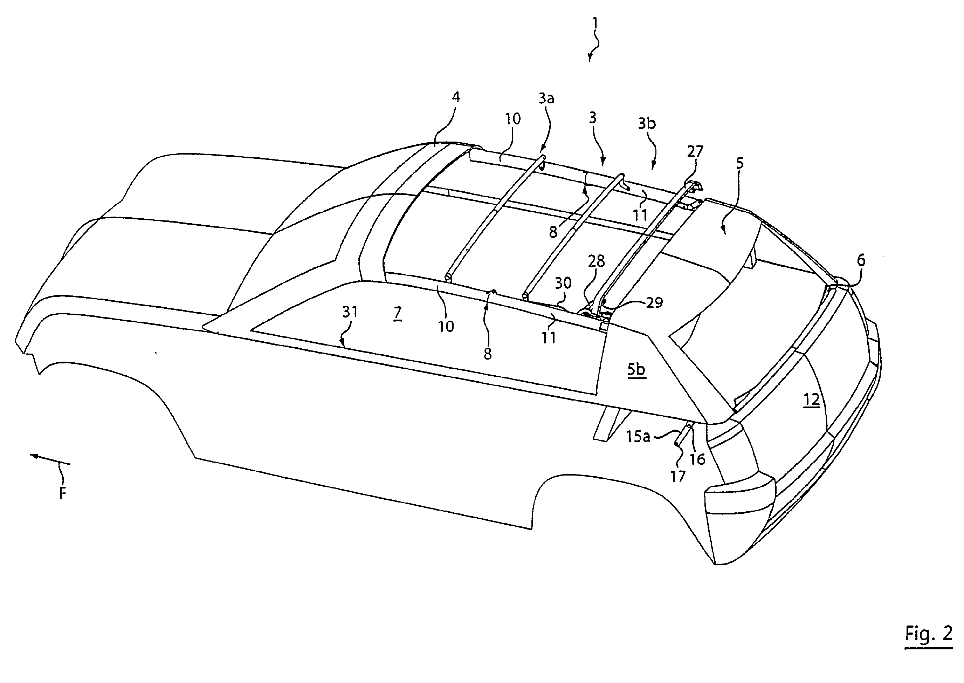

Auch der hintere, die Heckscheibe 6 umfassende Dachteil 5 kann entweder, wie im Ausführungsbeispiel dargestellt, vollständig starr oder zumindest bereichsweise flexibel sein. Die Heckscheibe 6 kann, wie zum Beispiel in Fig. 2 dargestellt ist, in die darunter liegende Heckklappe 12 einfahrbar sein.

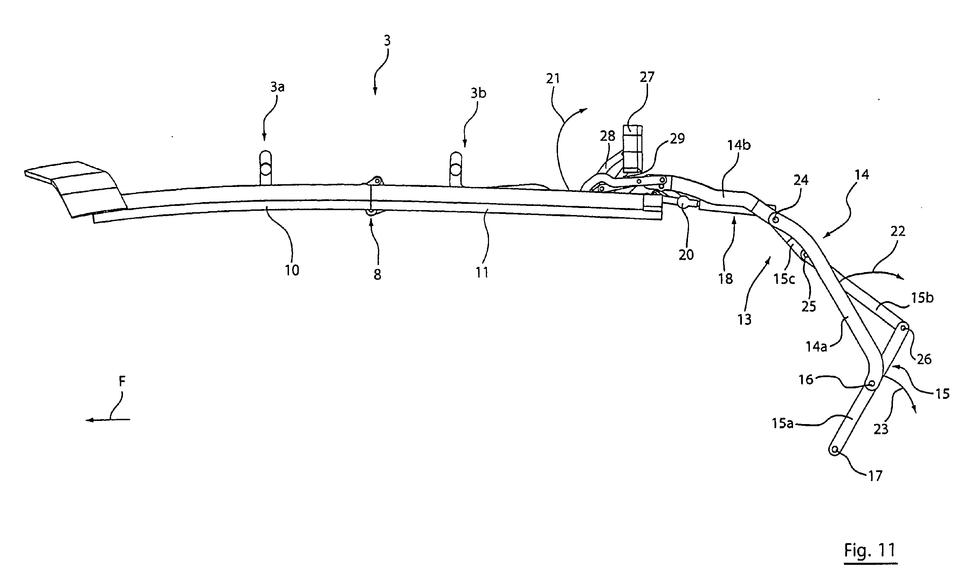

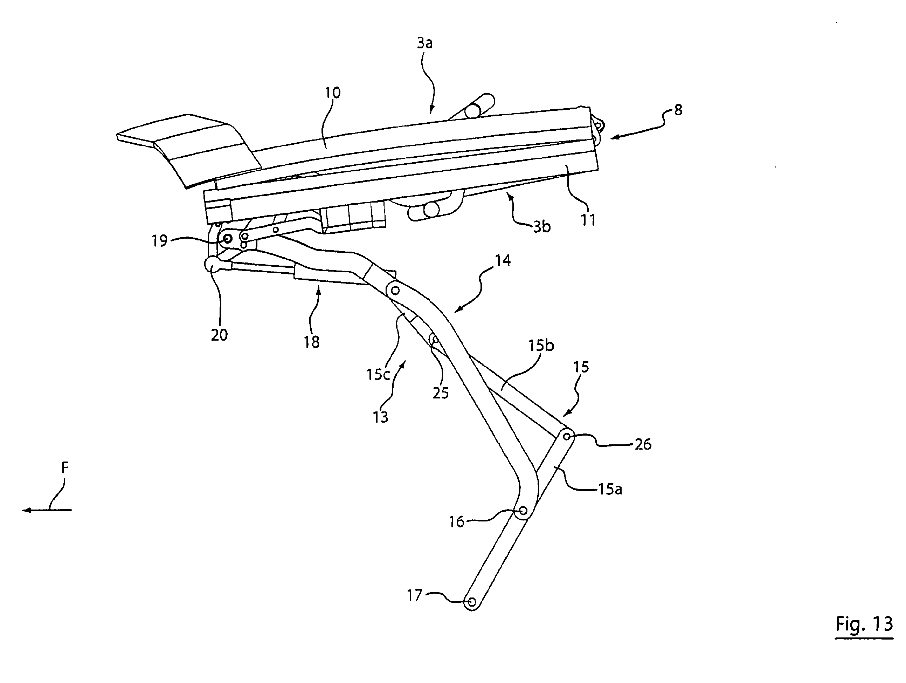

Die Dachteile 3 und 5 sind unabhängig voneinander beweglich und vollständig voneinander getrennt. Der Dachteil 3 ist über seitliche Gestänge 13, die jeweils als Vielgelenke ausgebildet sind, mit der Karosserie beweglich verbunden. Dabei sind an jeder Fahrzeugseite jeweils zwei Lenkerketten 14, 15 vorgesehen, die um karosseriefeste Lager 16, 17 schwenkbar sind. Details hierzu sind in den Figuren 11 bis 16 dargestellt.

Die Lenkerkette 15 greift über ein Antriebsorgan 18 an einem dem hinteren Ende des längs verlaufenden Rahmenteils 11 zugeordneten Gelenk 20 des vorderen Dachteils 3 an. Die Lenkerkette 14 greift hingegen über eine vertikal höher gelegene Horizontalschwenkachse 19 mittelbar an dem Rahmenteil 11 an. Durch den Höhenversatz der Angriffspunkte 18 und 20 ergibt sich ein Hebelarm, durch den das Rahmenteil 11 bei Ausschub des Antriebsorgans 18 um die zur Bewirkung der ersten Ablagestellung unbewegt bleibende Achse 19 in Richtung des Pfeils 21 schwenken kann. Dadurch ist die Öffnung des vorderen Dachteils 3 in eine erste, oberhalb des hinteren Dachteils 5 liegende Ablagestellung bewirkbar (Fig. 11 bis Fig. 13), die im Ausführungsbeispiel als zusätzliche, jedoch nicht zwingende Option für die Dachablage vorgesehen ist.

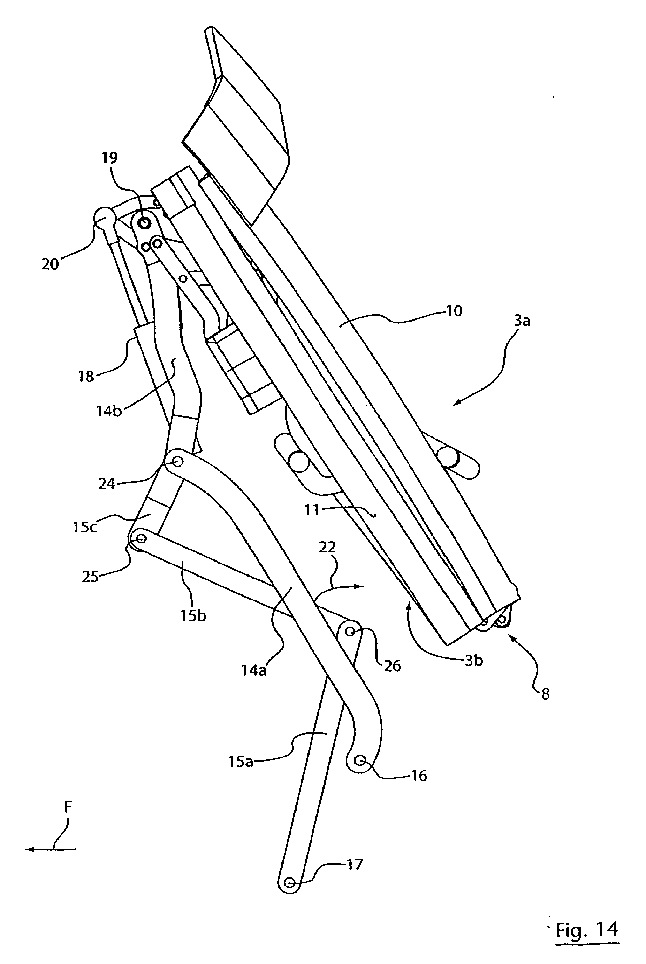

Zudem sind die Lenkerketten 14 und 15 noch um die karosseriefesten Achsen 16 und 17 in Richtung der Pfeile 22, 23 sowie gegensinnig hierzu schwenkbar (Fig. 14 bis Fig. 16).

Die Lenkerkette 14 ist an zumindest einem weiteren Gelenk 24 in die Abschnitte 14a und 14 b geteilt, wobei sich der Abschnitt 14a vom karosseriefesten Hauptlager 16 bis zu dem Gelenk 24 und der Abschnitt 14b von dort bis zur Achse 19 erstreckt. Die Lenkerkette 15 ist an zumindest zwei Gelenken 25, 26 geteilt, wobei sich der Abschnitt 15a vom karosseriefesten Hauptlager 17 bis zu dem Gelenk 26, der Abschnitt 15b von dort bis zum weiteren Gelenk 25 und der Abschnitt 15c von dort bis zum Antriebsorgan 18 erstreckt, wobei die schwenkbare Festlegung des Abschnitts 15c an dem Antriebsorgan 18 auf einer gemeinsamen horizontalen Schwenkachse mit dem Gelenk 24 der ersten Lenkerkette 14 liegt.

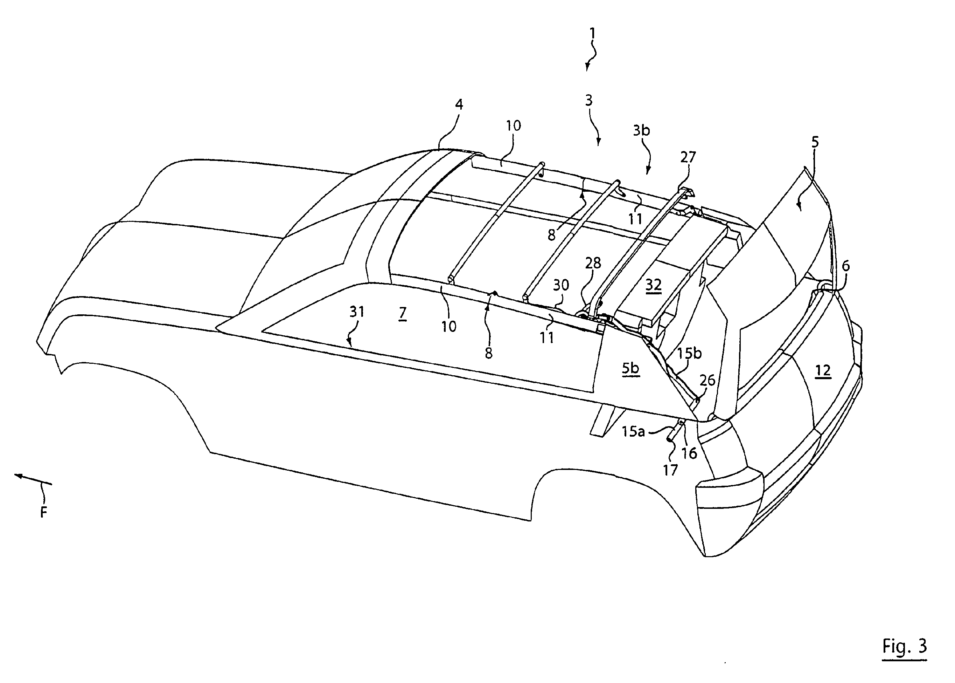

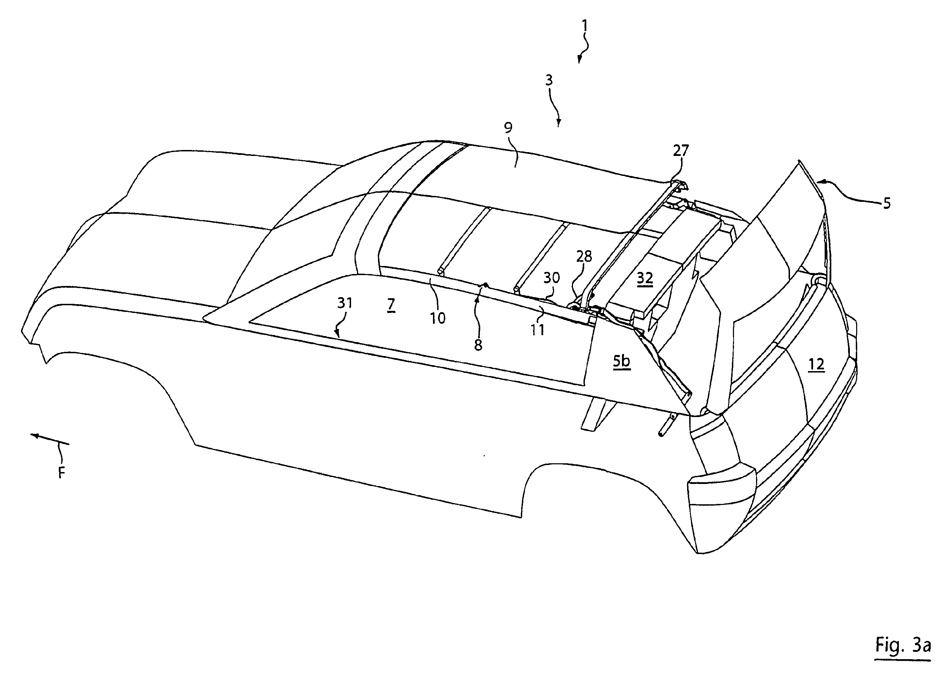

Dem im Ausführungsbeispiel textil bezogenen Dachbereich 3 ist ein gegenüber den seitlichen Rahmenteilen 10, 11 beweglicher hinterer Querspriegel 27 zugeordnet, der an zwei parallel zum Rahmenteil 11 erstreckten Hebeln 28, 29 gehalten ist. Durch Aufstellen dieser Hebel kann der Spriegel 27 im wesentlichen bei gleichbleibender Orientierung parallel nach oben und in Fahrtrichtung F nach vorne versetzt werden. Dadurch kommt es zu einem Aufstellen des hinteren Kantenbereiches des Dachteils 3, wodurch eine Belüftungsstellung erreicht ist. Diese kann auch während der Fahrt eingestellt werden, da die Bewegung der Hebel 28, 29 wenig Kraft erfordert und der nur im hinteren Bereich dann ansteigende textile Bezug 9 (Fig. 3a) wenig Angriffsfläche für den Fahrtwind bietet. Das Öffnen und Schließen dieser Belüftungsöffnung kann daher auch bei hoher Geschwindigkeit erfolgen. die Bewegung des Spriegels 27 benötigt nur sehr wenig Zeit. In abgesenkter Normalstellung spannt der Spriegel 27 den Bezug 9 und dichtet dessen hinteren Abschluß gegen eine in Fahrtrichtung vordere Kante des rückwärtigen Dachteils 5 ab.

Die Betätigung der Bewegung des Spriegels 27 kann vom Armaturenbrett aus fernsteuerbar sein und beispielsweise über elektrische oder hydraulische Antriebe bewirkt werden.

Anstelle des Spriegels 27 können auch andere Aufstellmechanismen, insbesondere auch bei festen Dachteilen, für einen rückwärtigen Bereich des beweglichen Dachteils 3 vorgesehen sein. Die Nutzung eines ohnehin vorhandenen Spriegels 27 vereinfacht dabei die Herstellung gegenüber aufwendigen Zusatzmechanismen. Auch das Fahrzeuggewicht wird durch die erfindungsgemäße zusätzliche Beweglichkeit des rückwärtigen Dachbereichs nicht signifikant erhöht.

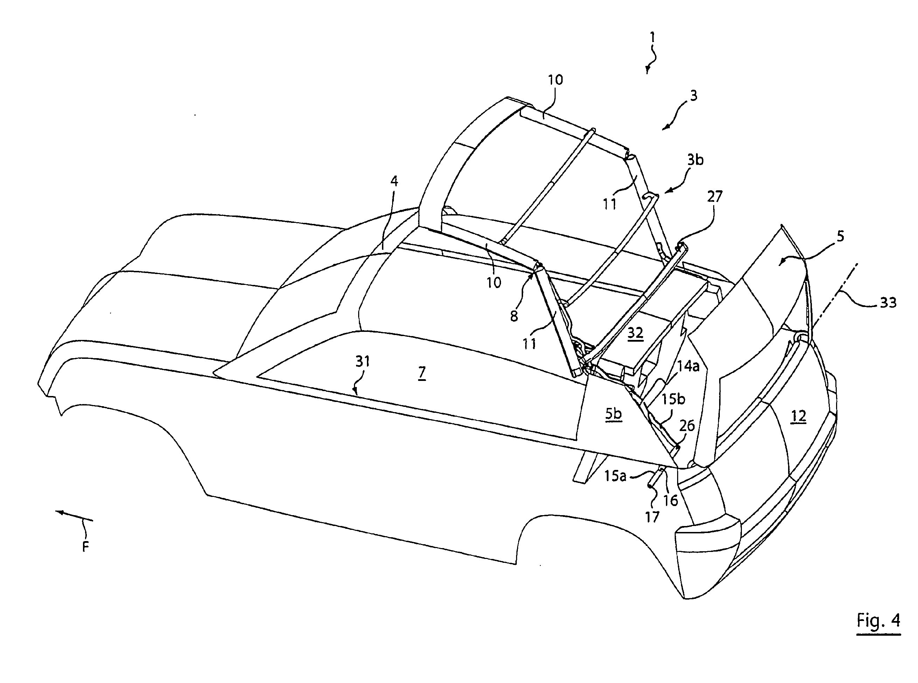

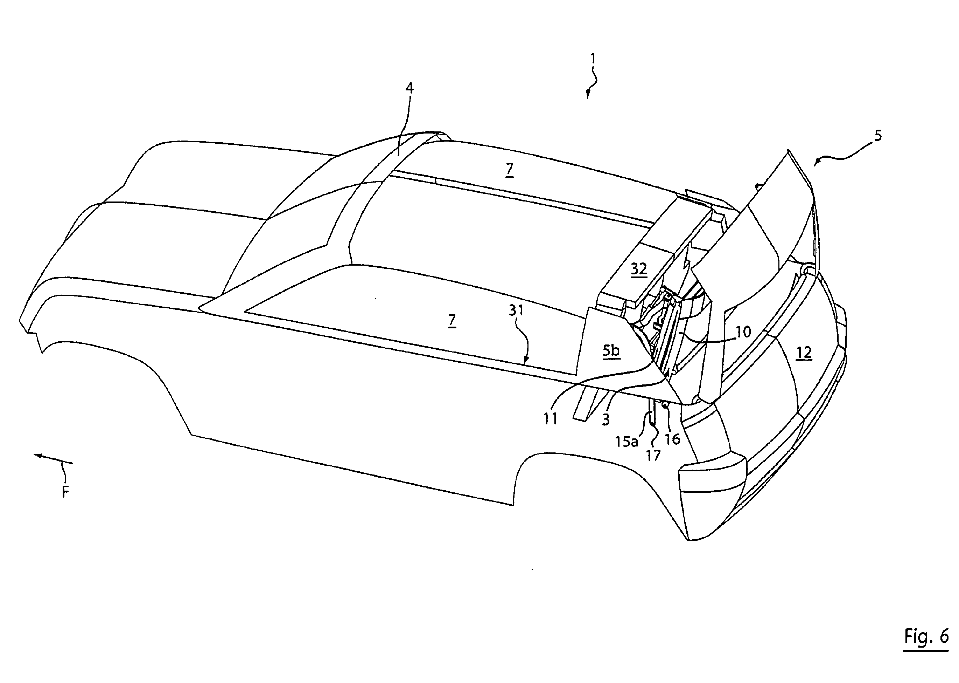

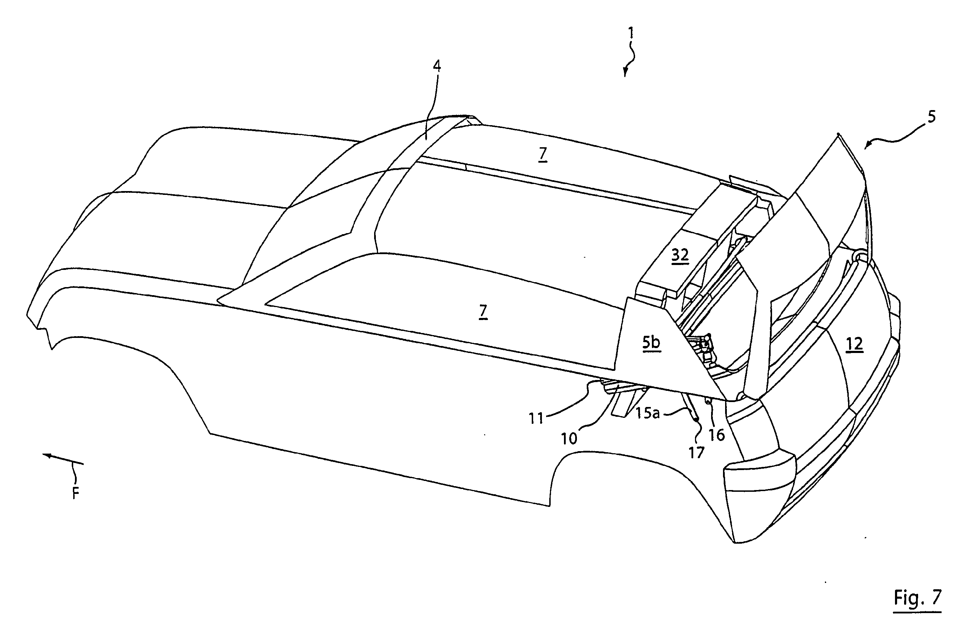

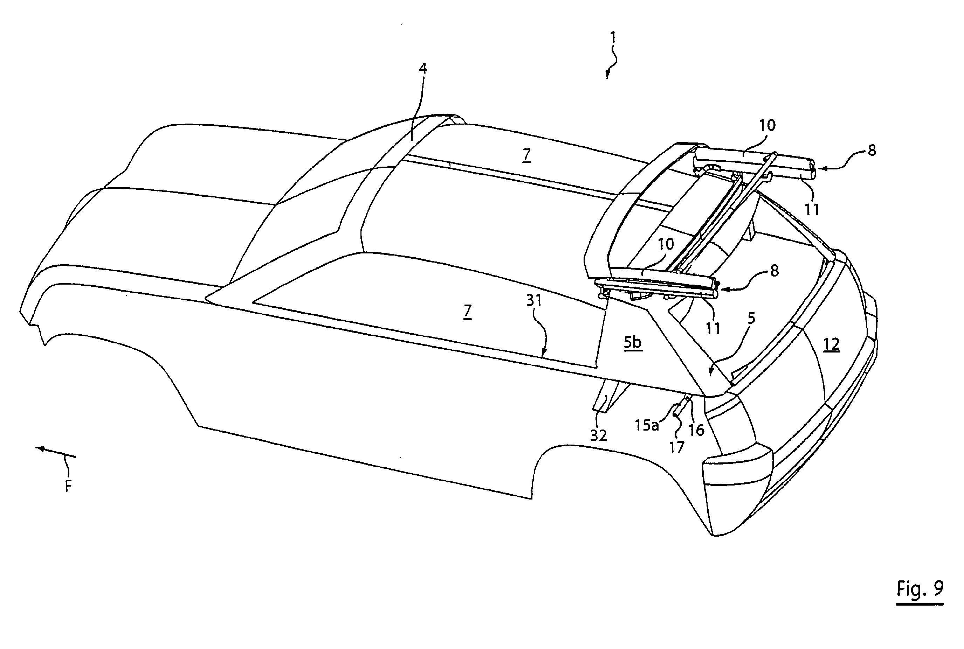

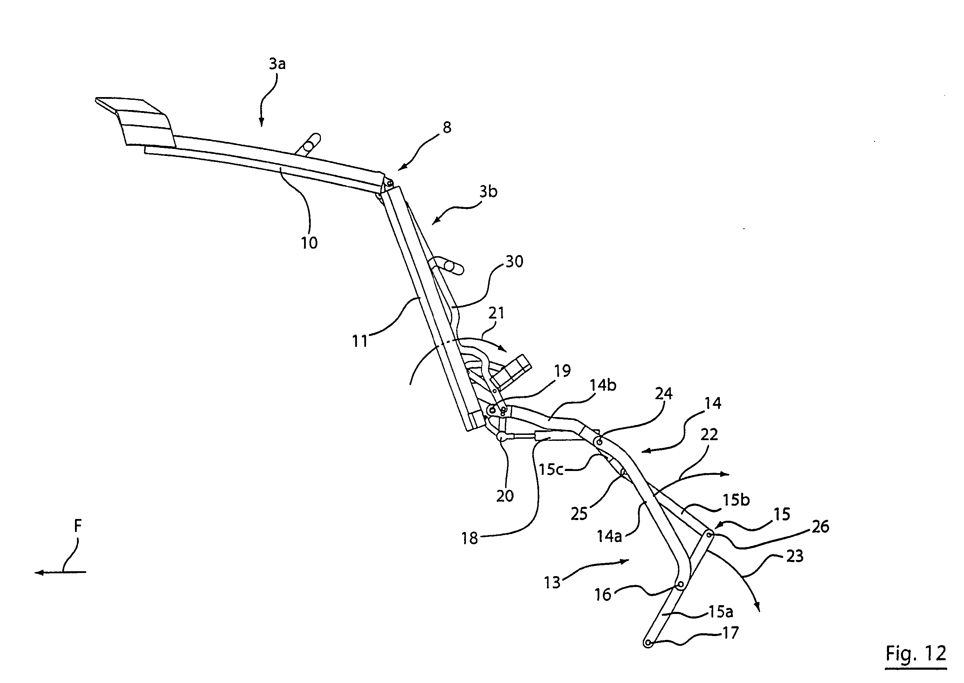

Um den beweglichen Dachteil 3 aus der geschlossenen Dachstellung nach Fig. 1 in die oben erwähnte erste Offenstellung nach Fig. 9, 10 und Fig. 13 zu überführen, in der er oberhalb des hinteren Dachteils 5 gehalten ist, wird zunächst der Spriegel 27 - und damit das hintere Ende des beweglichen Dachteils 3 - aufgestellt (Fig. 2, Fig. 11). In dieser Stellung kann der Dachteil 3 gegenüber dem hinteren Dachteil 5 bewegt werden. Der hintere Dachteil 5 bleibt hierbei, anders als für die Einstellung der zweiten Ablagestellung gemäß den Figuren 3 bis 8, unbewegt. Wie aus dem Übergang von Fig. 11 zu Fig. 12 deutlich wird, wird zunächst das Antriebsorgan 18 ausgefahren, um damit die Aufwärtsschwenkbewegung des Dachteils 3 um die Achse 19 in Richtung des Pfeils 21 einzuleiten. Gleichzeitig wird über ein Gestängeteil 30 zwangsweise ein Einfalten der Teile 3a und 3b um die Trennfuge 8 bewirkt. Im gezeigten Ausführungsbeispiel sind dort randseitig die Rahmenprofile 10, 11 jeweils über Scharniere miteinander gelenkig verbunden.

Die Lenkerketten 14, 15 werden dabei nicht um ihre karosserieseitigen Lager 16, 17 verschwenkt. Die Lagerstelle 24 behält somit ihre Position bei, ebenso die Schwenkachse 19.

Bei weiterem Ausschub des Organs 18 verschwenkt das Dachteil 3b in Richtung des Pfeils 21 weiter bis hin zur Einstellung einer Über-Kopf-Lage. Gleichzeitig werden die Teile 3a und 3b bis zu ihrem nahezu parallelen Übereinanderliegen zusammengefaltet (Fig. 9, 10, 13).

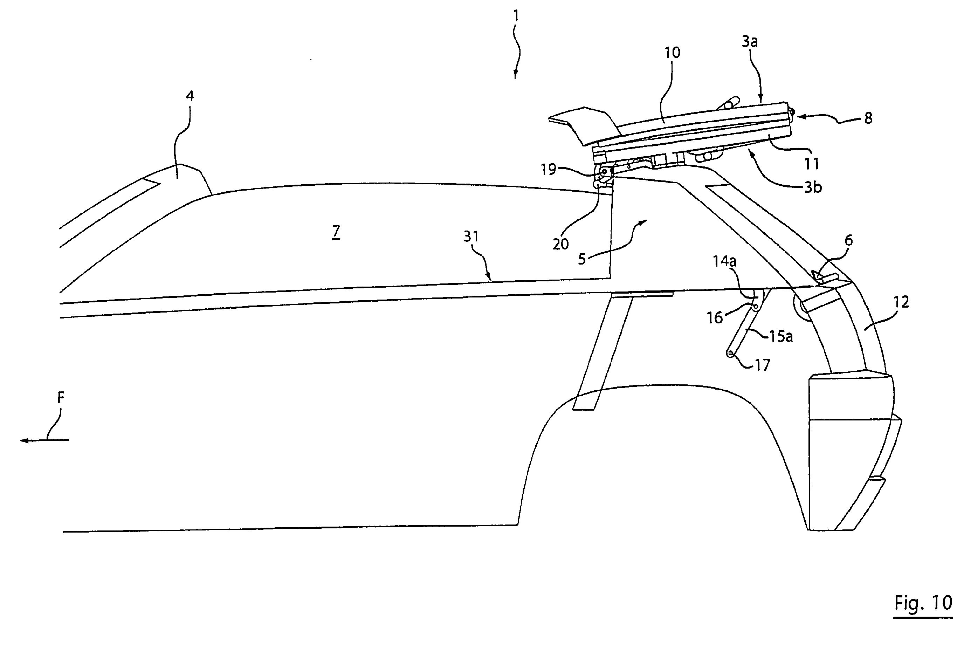

Da die Achse 19 ihre Stellung beibehält, ändern auch die Dachteile 3a, 3b ihre vertikale Lage nicht in Richtung einer Absenkung zur Fensterbrüstungslinie 31, sondern werden in der erhöhten Stellung oberhalb des hinteren Dachteils 5 abgelegt. Wie in Fig. 10 sichtbar ist, ist das so gebildete Paket des vorderen Dachteils 3 in Fahrzeuglängsrichtung hinreichend kurz, daß es das hintere Dachteil und somit auch das Fahrzeugheck nicht nach hinten überragt.

Weiterhin ist das eingefaltete Paket, bei dem die Rahmenteile 10 und 11 aufeinanderliegen, sehr flach, so daß der Luftwiderstand des Fahrzeugs durch diese Dachablagestellung nur geringfügig erhöht ist. Dadurch, daß nur ein Teil 3 des Daches 2 und nur in einer Ebene zu bewegen ist, ist die Bewegung gegenüber einer Vollöffnung oder einer Ablage des Dachteils 3 unterhalb der Fensterbrüstungslinie 31 erheblich beschleunigt. Der Gepäckraum bleibt hiervon unberührt, ebenso die Sicht nach hinten. Bei versenkten Seitenscheiben ergibt dennoch ein großzügiges Freiraumgefühl.

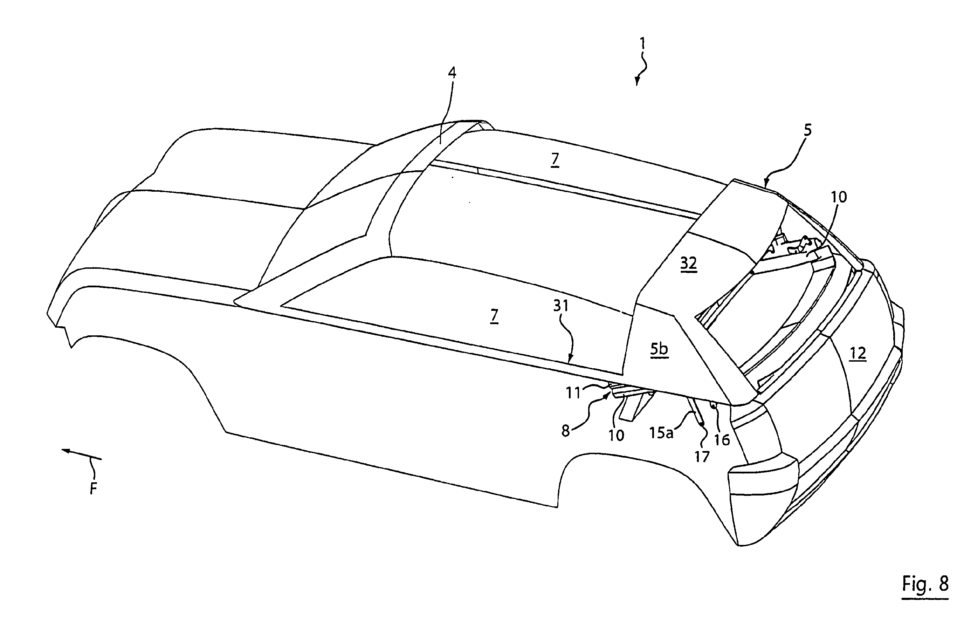

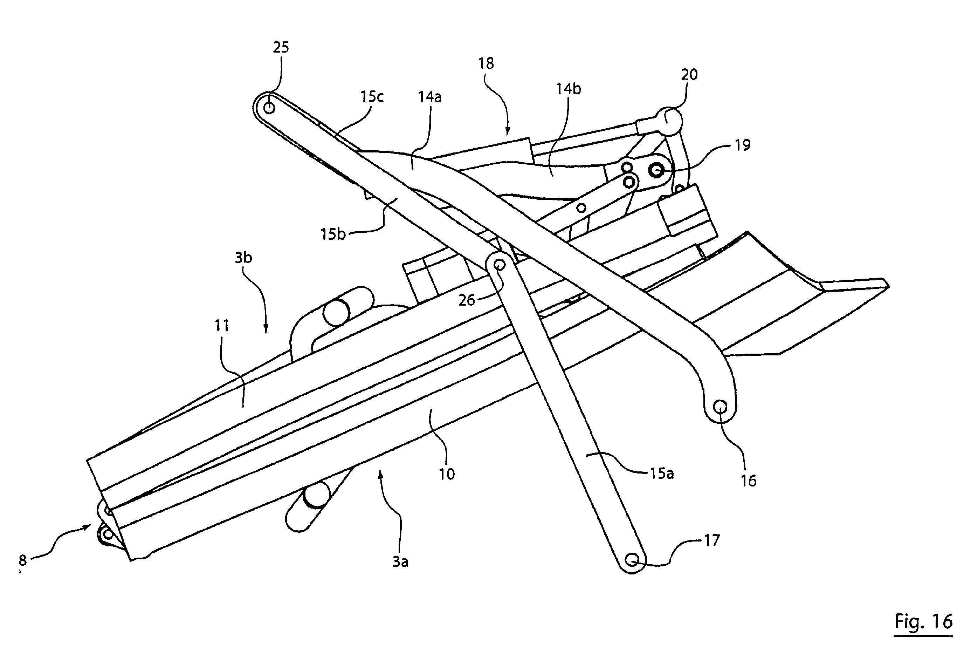

Um hingegen den beweglichen Dachteil 3 aus der geschlossenen Dachstellung nach Fig. 1 in eine zweite, hier ebenfalls als Möglichkeit der Ablage dargestellte Offenstellung nach Fig. 8 und Fig. 16 zu überführen, in der er unterhalb des hinteren Dachteils 5 gehalten ist, wird auch hier zunächst der Spriegel 27 - und damit das hintere Ende des beweglichen Dachteils 3 - aufgestellt (Fig. 2, Fig. 11). In dieser Stellung kann der Dachteil 3 gegenüber dem hinteren Dachteil 5 bewegt werden. Der hintere Dachteil 3 wird nun entweder vollständig oder unter Belassen der Stellung der Seitenteile 5b derart um eine rückseitige Horizontalachse 33 nach hinten verschwenkt, daß oberhalb eines hier fest stehenden Überrollbügels 32 ein Durchgangsraum für den vorderen Dachteil 3 freigegeben wird. Dadurch, daß die Heckscheibe 6 vorab nach unten in die Heckklappe 12 verlagert wurde, kann die Schwenkbewegung ohne Blockade durch die Scheibe 6 stattfinden. Die Bewegung des Dachteils 3 wird nun zunächst wie oben durch Ausschub des Antriebsorgans 18 bewirkt (Übergang von Fig. 11 zu Fig. 12), um damit die Aufwärtsschwenkbewegung des Dachteils 3 um die Achse 19 in Richtung des Pfeils 21 einzuleiten und ein Einfalten der Teile 3a und 3b um die Trennfuge 8 zu bewirken.

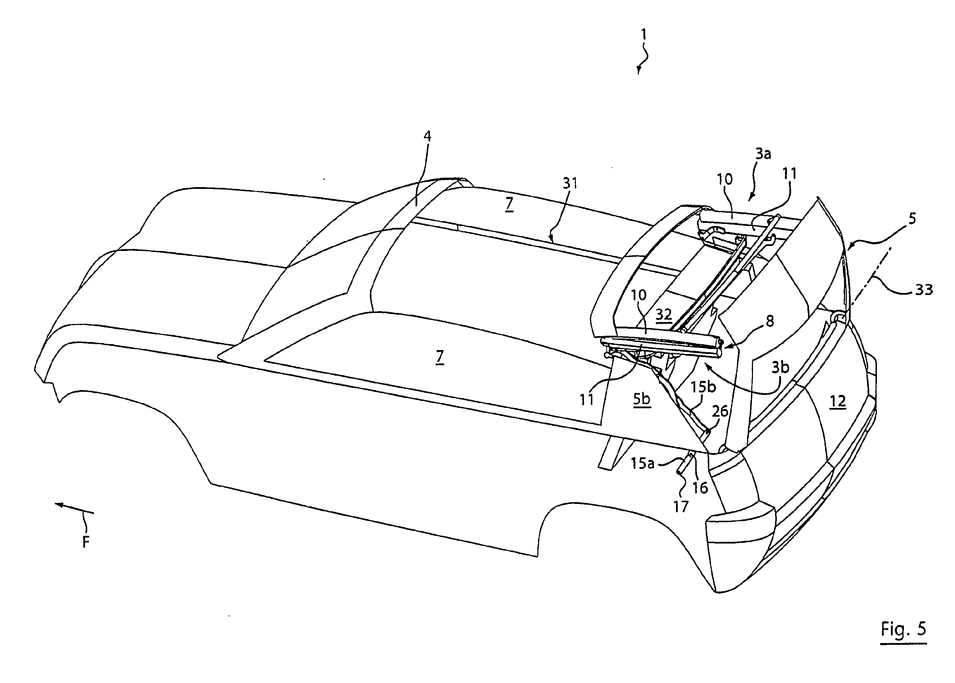

Die Lenkerketten 14, 15 werden dabei auch hier zunächst noch nicht um ihre karosserieseitigen Lager 16, 17 verschwenkt. Die Lagerstelle 24 behält noch ihre Position bei, ebenso die Schwenkachse 19, bis die Über-Kopf-Lage des Dachteils 3b nach Fig. 5 erreicht ist.

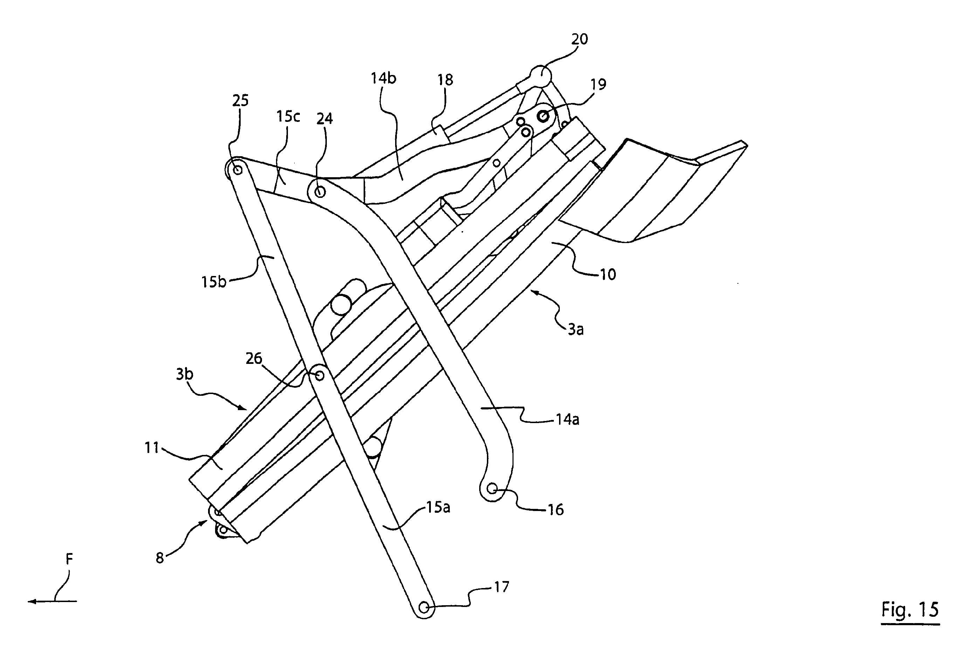

Diese Stellung des beweglichen Dachteils 3 entspricht der in Fig. 9 gezeigten, nur daß jetzt der hintere Dachteil 5 geöffnet ist, um einen Durchgang für die weitere Ablage des Dachteils 3 in die Karosserie freizugeben. Hierfür stellen sich die Lenker 14a und 14b steiler zueinander, d. h., daß am Gelenk 24 ihr Winkel zueinander verkleinert wird. Gleichzeitig aus der in den Figuren 9, 10 und 13 gezeigten Stellung der Abschnitt 15a entgegen der Richtung des Pfeils 23 um die Achse 17 verschwenkt, so daß der Winkel zwischen den Abschnitten 15a und 15b verkleinert, gleichzeitig der Winkel zwischen den Abschnitten 15b und 15c vergrößert wird. Mit dem um die Achse 24 schwenkenden Lenker 14b wird auch das Paket aus Dachteilen 3a und 3b somit in eine nahezu vertikale Stellung (Fig. 14) geschwenkt und bei weiter fortschreitender Bewegung (Fig. 15 und 16 sowie Fig. 6 bis Fig. 8) dann in eine an eine horizontale Über-Kopf-Lage des Dachteils 3a angenäherte Lage. In dieser Stellung ist der Dachteil 3 dann unterhalb des Dachteils 5 horizontal oder schräg gehalten, dieser kann anschließend wieder um die Achse 33 in seine Ausgangslage zurückschwenken (Fig. 8). Somit ist nach Fig. 8 ein TargaFahrzeug gebildet. Dabei steht der hintere Dachteil 5 in derselben Stellung wie bei vollständig geschlossenem Dach (Fig. 1). Es ist an einem Alternativfahrzeug oder je nach Ausbildung auch an demselben Fahrzeug möglich, daß der hintere Dachteil 5 (wahlweise) über dem Paket des vorderen Dachteils 3 unter der Fensterbrüstungslinie 31 ablegbar ist und dann ein Voll-Cabriolet-Fahrzeug gebildet wird.

Mit den vorgenannten Dachablagestellungen ist gezeigt, daß erfindungsgemäß verschiedene Dachablagestellungen verwirklicht werden können. Auch weitere, die hier nicht gezeigt sind, sind möglich. Ebenso kommen vollständig unterschiedliche Dachkinematiken in Betracht.

Es kann aufgrund der hier gezeigten Ablagekinematik ein feststehender und damit billiger Überrollbügel 32 Verwendung finden, der im gezeigten Ausführungsbeispiel zudem in jeder Stellung des Daches - somit auch in jeder Ablagestellung des beweglichen Dachteils 3 - vom hinteren Dachteil 5 übergriffen und somit optisch unauffällig und von außen nicht sichtbar ist. Die Durchtrittsöffnung für den beweglichen Dachteil 3 liegt oberhalb des Überrollbügels 32 und ist dadurch von diesem nicht eingeschränkt. Mit der Aufschwenkbarkeit des hinteren Dachteils 5 ist zudem sichergestellt, daß die Durchtrittsöffnung auch nach oben hin hinreichend groß ist, um eine ungestörte Bewegung des Dachteils 3 zu ermöglichen, und dennoch in geschlossener Stellung die gewünschte optische Verkleidung des Überrollschutzes 32 liefern zu können. Sofern der hintere Dachteil 5 nicht unterhalb der Fensterbrüstungslinie 31 versenkbar ist, kann der Überrollschutz dann, wie oben erwähnt, in jeder Endstellung des Daches 2 nach außen hin völlig verdeckt sein.

Der Überrollschutz 32 ist vorteilhaft als vormontiertes und insgesamt in die Karosserie einsetzbares Modul ausgebildet.

## Patentansprüche

1. Kraftfahrzeug (1) mit einem Dach (2), das zumindest einen in seinem rückwärtigen Bereich aufstellbaren Teil (3) aufweist, in dessen aufgestellter Position der dem aufstellbaren, rückwärtigen Bereich vorgeordnete Bereich des beweglichen Dachteils (3) in geschlossener Stellung verbleiben kann, wobei sich der Dachteil (3) vom Nahbereich eines Windschutzscheibenrahmens (4) bis zu einem hinteren, insbesondere starren Dachteil (5) erstreckt,
**dadurch gekennzeichnet,**
**daß** der bewegliche Dachteil (3) die volle Breite zwischen Oberkanten von Seitenscheiben (7) des Kraftfahrzeugs (1) einnimmt und in einer weiteren Öffnungsstellung insgesamt zu seiner Öffnung beweglich ist.

2. Kraftfahrzeug nach Anspruch 1,
**dadurch gekennzeichnet,**
**daß** in Fahrt die Verlagerung im rückwärtigen Bereich in die und aus der aufgestellten Position möglich ist.

3. Kraftfahrzeug nach einem der Ansprüche 1 oder 2,
**dadurch gekennzeichnet,**
**daß** der bewegliche Dachteil (3) mit einem flexiblen Bezug (9) bespannt ist.

4. Kraftfahrzeug nach einem der Ansprüche 1 bis 3,
**dadurch gekennzeichnet,**
**daß** zur Aufstellbarkeit des rückwärtigen Bereichs ein diesen untergreifender Spriegel (27) vorgesehen ist, der an seitlichen Rahmenteilen (11) des beweglichen Dachteils (3) verlagerbar gehalten ist.

5. Kraftfahrzeug nach Anspruch 4,
**dadurch gekennzeichnet,**
**daß** zur Verlagerung des Spriegels (27) zumindest ein fernsteuerbarer Antrieb vorgesehen ist.

6. Kraftfahrzeug nach einem der Ansprüche 1 bis 5,
**dadurch gekennzeichnet,**
**daß** der hintere Dachteil (5) bei insgesamt geöffneter und insgesamt geschlossener Stellung des beweglichen Dachteils (3) jeweils in der gleichen Stellung steht.

7. Kraftfahrzeug nach einem der Ansprüche 1 bis 6,
**dadurch gekennzeichnet,**
**daß** der hintere Dachteil (5) unterhalb einer Fensterbrüstungslinie (31) der Karosserie versenkbar ist.

8. Kraftfahrzeug nach einem der Ansprüche 1 bis 7,
**dadurch gekennzeichnet,**
**daß** der hintere Dachteil (5) von einem starren Überrollschutz (32) untergriffen ist.

9. Kraftfahrzeug nach einem der Ansprüche 1 bis 8,
**dadurch gekennzeichnet,**
**daß** der hintere Dachteil (5) zur Freigabe einer Durchtrittsöffnung für die Öffnung des insgesamt beweglichen Dachteils (3) zumindest bereichsweise beweglich ist.

10. Kraftfahrzeug nach Anspruch 9,
**dadurch gekennzeichnet,**
**daß** der hintere Dachteil (5) zur Freigabe der Durchtrittsöffnung um eine heckwärtige Achse (33) aufschwenkbar und über dem geöffneten Dachteil (3) wieder zuschwenkbar ist.

11. Kraftfahrzeug nach einem der Ansprüche 8 bis 10,
**dadurch gekennzeichnet,**
**daß** die Durchtrittsöffnung für den beweglichen Dachteil (3) zwischen dem starren Überrollschutz (32) und dem geöffneten hinteren Dachteil (5) gelegen ist.

## Claims

1. Motor vehicle (1) having a roof (2), which includes at least one part (3) raisable in a rearward portion thereof, in which raised position the portion of the movable roof part (3) that is disposed forwardly of the raised portion can remain in a closed position, wherein the roof part (3) extends from the adjacent portion of a windscreen frame (4) to a rear, in particular rigid, roof part (5),
**characterized in that**,
the movable roof part (3) occupies the entire width between upper edges of side windows (7) of the motor vehicle (1) and is movable for the opening thereof as a whole into a further opening position.

2. Motor vehicle according to claim 1,
**characterized in that**,
while driving, the displacement in the rearward portion into and out of the raised position is possible.

3. Motor vehicle according to one of claims 1 or 2,
**characterized in that**,
the movable roof part (3) is covered with a flexible covering (9).

4. Motor vehicle according to one of claims 1 to 3,
**characterized in that**,
a roof bow (27) is provided for the raising of the rearward portion, which roof bow (27) engages the rearward portion from below and is displaceably retained on side frame parts (11) of the movable roof part (3).

5. Motor vehicle according to claim 4,
**characterized in that**,
at least one remotely-controllable drive is provided for the displacement of the roof bow (27).

6. Motor vehicle according to one of claims 1 to 5,
**characterized in that**,
the rear roof part (5) is in the same position when the movable roof part (3) is in the completely opened and the completely closed position.

7. Motor vehicle according to one of claims 1 to 6,
**characterized in that**,
the rear roof part (5) is lowerable underneath a window shoulder line (31) of the vehicle body.

8. Motor vehicle according to one of claims 1 to 7,
**characterized in that**,
the rear roof part (5) is engaged from below by a rigid roll bar (32).

9. Motor vehicle according to one of claims 1 to 8,
**characterized in that**,
the rear roof part (5) is movable, at least in certain portions thereof, for clearing a passage for the opening of the overall movable roof part (3).

10. Motor vehicle according to claim 9,
**characterized in that**,
the rear roof part (5) is outwardly pivotable about a rearward axis (33) for clearing the passage and is then inwardly pivotable over the opened roof part (3).

11. Motor vehicle according to one of claims 8 to 10,
**characterized in that**,
the passage for the movable roof part (3) is located between the rigid roll bar (32) and the opened rear roof part (5).

## Revendications

1. Véhicule automobile (1) ayant un toit (2) muni au moins dans sa région arrière, d'une partie ouvrante (3) et qui en position ouverte laisse la zone devant la partie arrière ouvrante de la partie de toit mobile (3) en position fermée, et la partie de toit (3) s'étend de la région proche du cadre (4) du pare-brise jusqu'à la partie arrière de toit (5), notamment rigide,
**caractérisé en ce que**
la partie de toit (3), mobile, occupe toute la largeur entre le bord supérieur des vitres latérales (7) du véhicule (1) et dans une autre position ouverte, cette partie est mobile globalement pour son ouverture.

2. Véhicule automobile selon la revendication 1,
**caractérisé en ce que**
pendant la circulation du véhicule, il est possible de déplacer la zone arrière dans la position ouverte et inversement.

3. Véhicule automobile selon l'une des revendications 1 ou 2,
**caractérisé en ce que**
la partie mobile (3) du toit est tendue par un revêtement souple (9).

4. Véhicule automobile selon l'une des revendications 1 à 3,
**caractérisé en ce que**
pour ouvrir la zone arrière, il est prévu un arceau (27) passant en dessous de celle-ci et qui est tenu de manière mobile sur des parties latérales (11) du cadre de la partie mobile (3) du toit.

5. Véhicule automobile selon la revendication 4,
**caractérisé par**
au moins un entraînement télécommandé pour déplacer l'arceau (27).

6. Véhicule automobile selon l'une des revendications 1 à 5,
**caractérisé en ce que**
la partie arrière de toit (5) se trouve toujours dans la même position, que la partie mobile (3) du toit soit en position globalement ouverte ou en position globalement fermée.

7. Véhicule automobile selon l'une des revendications 1 à 6,
**caractérisé en ce que**
la partie arrière (5) du toit peut descendre en dessous de la ligne basse (31) de fenêtre sur la carrosserie.

8. Véhicule automobile selon l'une des revendications 1 à 7,
**caractérisé en ce que**
la partie arrière (5) du toit est prise par en dessous par un arceau de protection de capotage (32), rigide.

9. Véhicule automobile selon l'une des revendications 1 à 8,
**caractérisé en ce que**
la partie arrière (5) du toit est mobile au moins par zones pour libérer un orifice de passage pour l'ouverture de l'ensemble de la partie mobile (3) de toit.

10. Véhicule automobile selon la revendication 9,
**caractérisé en ce que**
la partie arrière de toit (5) peut pivoter dans le sens de l'ouverture pour libérer un orifice de passage autour d'un axe arrière (33) et elle peut de nouveau basculer par-dessus la partie de toit ouverte (3).

11. Véhicule automobile selon l'une des revendications 8 à 10,
**caractérisé en ce que**
l'orifice de passage pour la partie mobile (3) du toit est situé entre l'arceau de protection de capotage (32) rigide et la partie arrière ouverte (5) du toit.
